(19) Europäisches Patentamt
European Patent Office
Office européen des brevets

(11) Veröffentlichungsnummer: **0 362 464 B1**

(12)

# EUROPÄISCHE PATENTSCHRIFT

(45) Veröffentlichungstag der Patentschrift:
18.09.91 Patentblatt 91/38

(51) Int. Cl.⁵: **G01G 19/08**, G01G 21/23,
G01G 23/00

(21) Anmeldenummer: **89105308.4**

(22) Anmeldetag: **24.03.89**

(54) **Palettenwaage.**

(30) Priorität: **07.10.88 DE 8812639 U**

(43) Veröffentlichungstag der Anmeldung:
**11.04.90 Patentblatt 90/15**

(45) Bekanntmachung des Hinweises auf die
Patenterteilung:
**18.09.91 Patentblatt 91/38**

(84) Benannte Vertragsstaaten:
**BE CH DE ES FR LI SE**

(56) Entgegenhaltungen:
**DE-U- 8 028 400**
**FR-A- 462 629**
**US-A- 2 281 769**
**US-A- 3 543 959**
**US-A- 4 666 004**
**US-A- 4 682 665**

(73) Patentinhaber: **Mettler-Toledo (Köln) GmbH**
**Stolberger Strasse 11**
**W-5000 Köln 41 (DE)**

(72) Erfinder: **Fülles, Helmwart, Dipl.-Ing.**
**Alarichstrasse 73**
**W-5000 Köln 21 (DE)**
Erfinder: **Korte, Herbert**
**Im Kirchtal 34a**
**W-5210 Troisdorf-Sieglar (DE)**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**W-5000 Köln 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 362 464 B1

## Beschreibung

Die Erfindung betrifft eine Palettenwaage mit einem flachen, U-förmigen Lastrahmen, dessen eines Ende eine Fahrrollen anordnung trägt und dessen mit den Wägezellen versehene Tragschenkel durch einen Querträger miteinander verbunden sind.

Palettenwaagen dienen zum Wägen von Paletten, die auf die Tragschenkel der Waage von einem Hubwagen oder Gabelstapler abgesetzt werden, dessen Traggabel zwischen die Tragschenkel der Waage einfahren kann. Um die Palettenwaage leicht zum Wägeort transportieren zu können, sind die freien Enden der Tragschenkel mit Fahrrollen versehen, die sich im Betriebszustand in geringem Abstand von Boden befinden, jedoch dann auf den Boden gelangen, wenn der Lastrahmen am Querträgerende angehoben wird.

Da die Palettenwaage nur verfahren werden kann, wenn ihr Querträgerende angehoben wird, muß die Waage beim Verfahren an ihrem schwereren Ende getragen werden, was sehr mühevoll ist. An der Außenseite des Querträgers ist normalerweise auch eine Libelle zum Ausrichten der Waage und ein Kabelanschluß für ein Kabel vorhanden, das zu einer entfernten Anzeigevorrichtung, einem Wiegekartendrucker oder dergleichen peripherem Gerät führt. Um die Libelle und den Kabelanschluß nicht zu beschädigen, kann die Palettenwaage hochkant nur auf den freien Enden der Tragschenkel abgestellt werden, wozu ihr schwereres, durch den Querträger verbundenes Ende angehoben werden muß.

Aufgabe der Erfindung ist es, eine U-förmige Palettenwaage der eingangs erläuterten Art so auszubilden, daß sie mit geringem Kraftaufwand leicht transportiert und platzsparend abgestellt werden kann und daß über den Lastrahmen vorspringende Anbauteile vor Beschädigung geschützt sind.

Diese Aufgabe wird mit der Erfindung dadurch gelöst, daß wenigstens eine Fahrrolle an demjenigen Ende der Waage angeordnet ist, an dem sich der Querträger befindet.

Diese Ausgestaltung hat den Vorteil, daß die Palettenwaage beim Transport an ihrem leichteren Ende, nämlich an den freien Enden der Tragschenkel angehoben werden kann und mit ihrem schwereren Ende von den Fahrrollen abgestützt wird. Der Transport der Waage ist deshalb auch über größere Strecken wesentlich leichter zu bewältigen.

Wenn eine Libelle zum Ausrichten der Waage und eine Anschlußvorrichtung für ein Kabel an der Außenseite des Querträgers angeordnet sind, ist es besonders zweckmäßig, wenn die Tragschenkel über die Außenseite des Querträgers hinausragende Verlängerungen aufweisen, in denen die Fahrrollen gelagert sind. Libelle und Kabel sind dann geschützt in dem Hohlraum untergebracht, der von der Außenseite des Querträgers und den Verlängerungen der Tragschenkel gebildet wird. Es ist dann auch möglich, die Palettenwaage hochkant an eine Mauer gelehnt so abzustellen, daß sich ihr mit dem Querträger versehenes, schwereres Ende unten befindet, ohne daß hierbei Libelle oder Kabelanschluß beschädigt werden.

Um den Transport der Palettenwaage zu erleichtern, können an den freien Enden der Tragschenkel Handhaben angeordnet sein, die vorzugsweise als Griffmulden ausgebildet sind, so daß die Waage an diesem Ende keine zusätzlichen, vorstehenden Teile aufweist.

Weitere Merkmale und Vorteile der Erfindung ergeben sich aus der nachfolgenden Beschreibung und der Zeichnung, in der eine bevorzugte Ausführungsform an einem Beispiel näher erläutert ist. Es zeigt :

Fig. 1     eine Palettenwaage nach der Erfindung in einer perspektivischen Darstellung,
Fig. 2     eine Seitenansicht der Waage nach Fig. 1 in Richtung des Pfeiles II gesehen und
Fig. 3     die Palettenwaage nach Fig. 1 in einer Draufsicht in Richtung des Pfeiles III.

Die Palettenwaage nach der Erfindung hat einen flachen, im Grundriß U-förmigen Lastrahmen 10, der aus zwei Tragschenkeln 11 und 12 besteht, in denen sich je zwei Wägezellen 13 und 14 befinden und die am einen Ende 15 durch einen Querträger 16 miteinander verbunden sind. Tragschenkel 11, 12 und Querträger 16 bestehen aus Profilstahl mit U- oder kastenförmigem Querschnitt und sind so zusammengeschweißt, daß die Tragschenkel 11 und 12 mit Verlängerungen 17 und 18 über die Außenseite 19 des Querträgers 16 vorstehen. Die Verlängerungen 17 und 18 und die Außenseite 19 des Querträgers 16 begrenzen hierdurch einen am Ende 15 der Waage offenen Raum 20, in dem sich eine Libelle 21 und eine Anschlußvorrichtung 22 für ein Kabel 23 befinden. Die Libelle 21, die zum Ausrichten der Waage dient, ist ebenso wie die Anschlußvorrichtung 22 an der Außenseite 19 des Querträgers 16 befestigt. Das Kabel 23 ist an eine hier nicht näher dargestellte Auswertevorrichtung angeschlossen, die sich im Inneren des Querträgers 16 befindet. Es führt zu einer ebenfalls nicht näher dargestellten, entfernten Anzeigevorrichtung, einem Wiegekartendrucker oder dergleichen.

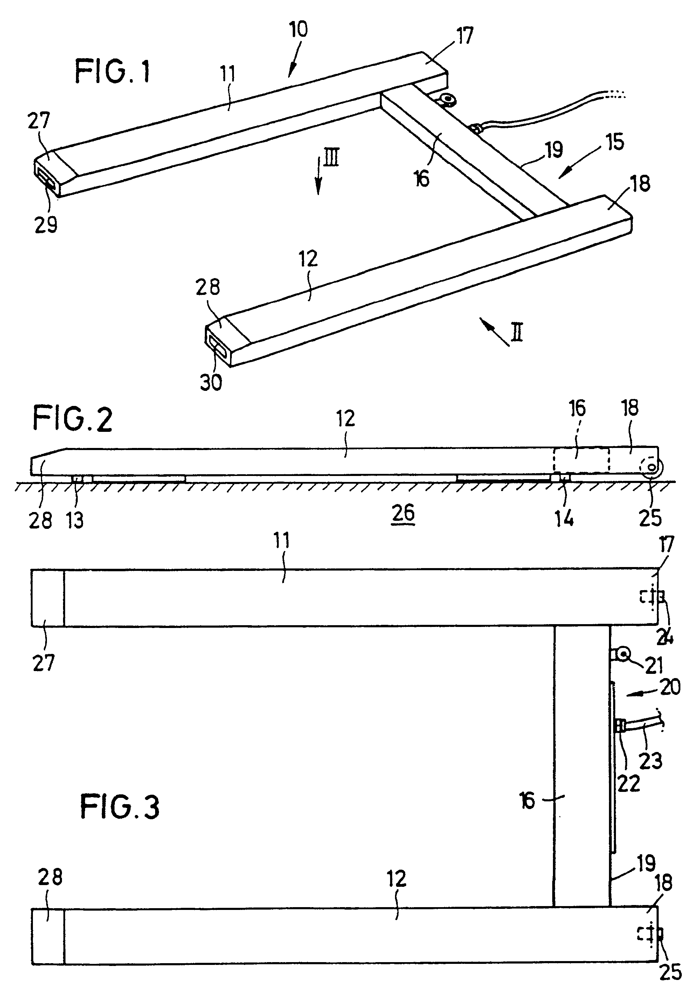

Man erkennt aus den Figuren 2 und 3, daß in den Verlängerungen 17 und 18 der Tragschenkel 11 und 12 Fahrrollen 24 bzw. 25 angeordnet sind. Diese Fahrrollen 24 und 25 sind so in den Verlängerungen 17 und 18 der Tragschenkel 11 und 12 gelagert, daß sie sich im Abstand vom Boden 26 befinden, wenn der Lastrahmen 10 sich mit den Fußteilen seiner Wägezellen 13 und 14 auf dem Boden 26 abstützt. Wenn dagegen die Trag-

2

schenkel 11 und 12 an ihren freien Enden 27 und 28 angehoben werden, erreichen die Fahrrollen 24 und 25 mit ihrem Außenumfang den Boden 26 und rollen auf diesem ab, wenn der Lastrahmen 10 in schräger Lage über den Boden geschoben oder gezogen wird.

Um das Anheben und Verfahren der Palettenwaage zu erleichtern, sind in den freien Enden 27 und 28 der Tragschenkel 11 und 12 Griffmulden 29 und 30 vorgesehen, die natürlich auch durch andere Handhaben ersetzt werden könnten.

Die Erfindung ist nicht auf das dargestellte und beschriebene Ausführungsbeispiel beschränkt, sondern es sind mehrere Änderungen und Ergänzungen möglich, ohne den Rahmen der Erfindung zu verlassen. Beispielsweise könnten die Tragschenkel 11 und 12 mit dem Querträger 16 auch bündig abschließen und die Fahrrollen 24 und 25 könnten im Querträger in der Nähe von dessen Außenseite 19 gelagert sein. Bei kleineren Ausführungen kann auch eine einzige Fahrrolle in der Mitte der Außenseite des Querträgers genügen. Bei einer solchen Ausführungsform befinden sich Libelle und Kabeleinführung dann zweckmäßig an der Außenseite eines der Tragschenkel. Ferner können die Handhaben an den freien Enden der Tragschenkel auch einfach von den nach unten umgebogenen Rändern der Profilträger gebildet werden, aus denen die Tragschenkel hergestellt sind.

## Patentansprüche

1. Palettenwaage mit einem flachen, U-förmigen Lastrahmen (10), dessen eines Ende eine Fahrrollen anordnung trägt und dessen mit den Wägezellen (13, 14) versehene Tragschenkel (11, 12) durch einen Querträger miteinander verbunden sind, **dadurch gekennzeichnet,** daß wenigstens eine Fahrrolle (24, 25) an demjenigen Ende (15) der Waage angeordnet ist, an dem sich der Querträger (16) befindet.

2. Palettenwaage nach Anspruch 1, **dadurch gekennzeichnet,** daß an der Außenseite (19) des Querträgers (16) eine Libelle (21) zum Ausrichten der Waage und eine Anschlußvorrichtung (22) für ein Kabel (23) angeordnet sind und daß die Tragschenkel (11, 12) über die Außenseite (19) des Querträgers (16) hinausragende Verlängerungen (17, 18) aufweisen, in denen die Fahrrollen (24, 25) gelagert sind.

3. Palettenwaage nach Anspruch 1 oder 2, **dadurch gekennzeichnet,** daß an den freien Enden (17, 18) eines jeden Tragschenkels (24, 25) eine Handhabe (29, 30) angeordnet ist.

4. Palettenwaage nach Anspruch 3, **dadurch gekennzeichnet,** daß die Handhaben Griffmulden (29, 30) sind.

## Claims

1. Scale for weighing pallets, comprising a flat, U-shaped supporting frame (10), one end thereof being equipped with a travelling wheel assembly, and the supporting legs (11, 12) thereof carrying the load cells and being interconnected by a crossbeam (16), characterized in that at least one of the wheels (24, 25) is mounted at that end (15) of the scale at which the crossbeam (16) is located.

2. Scale as claimed in Claim 1, characterized in that the outside of the crossbeam (16) is provided with a bubble level (21) for levelling the scale as well as a cable connection means (22) for connection of a cable (23), and that the supporting legs (11, 12) are provided with extended parts (17, 18) projecting beyond the outside (19) of the crossbeam (16), with the wheels (24, 25) mounted in said extended parts.

3. Scale as claimed in any of Claims 1 to 2, characterized in that there is disposed a handle means (29, 30) at the free end (17, 18) of each supporting leg (24, 25).

4. Scale as claimed in Claim 3, characterized in that the handle means are in the form of recessed grips (29, 30).

## Revendications

1. Balance à palettes à châssis porte-charge (10) plat en forme de U, dont l'une des extrémités porte un dispositif de roulettes, et dont les branches porteuses (11, 12) dotées des cellules de pesage (13, 14) sont reliées entre elles par une traverse (16), caractérisée en ce qu'au moins une roulette (24, 25) est placée à l'extrémité (15) de la balance sur laquelle se trouve la traverse (16).

2. Balance à palettes selon la revendication 1, caractérisée en ce qu'une nivelle (21) servant à mettre la balance à niveau et un dispositif de connexion (22) d'un câble (23) sont assemblés à la face extérieure (19) de la traverse (16) et en ce que les branches porteuses (11, 12) présentent des prolongements (17, 18) en

3

saillie au-delà de la face extérieure (19) de la traverse (16), dans lesquels sont montées les roulettes (24, 25).

3. Balance à palettes selon la revendication 1 ou 2, caractérisée en ce qu'une poignée (29, 30) est disposée aux extrémités libres (27, 28) de chacune des branches porteuses (11, 12).

4. Balance à palettes selon la revendication 3, caractérisée en ce que les poignées sont des creux de prise (29, 30).

FIG.1

FIG.2

FIG.3